# EUROPEAN PATENT SPECIFICATION

(11) **EP 1 884 958 B1**
(45) Date of publication and mention of the grant of the patent: **21.11.2012**
(21) Application number: 06118157.4
(22) Date of filing: 31.07.2006
(51) Int. Cl.: G21K 4/00, C09D 4/06

(54) **Polymer compositions and use thereof as topcoat layers for phosphor or scintillator screens or panels.**
Polymerzusammensetzungen und deren Verwendung als Deckbeschichtungen für Leuchtstoff- oder Szintillationsschirme oder-panele
Compositions de polymères et leurs utilisations comme surcouches pour des écrans ou panneaux au phosphore ou des écrans ou panneaux scintillateurs

(43) Date of publication of application: 06.02.2008
(73) Proprietor: Agfa HealthCare NV, 2640 Mortsel (BE)
(72) Inventor: Williamson, Alexander AGFA-GEVAERT, 2640, Mortsel (BE); Leblans, Paul AGFA-GEVAERT, 2640, Mortsel (BE)
(74) Representative: Theunis, Patrick

(56) References cited:
- EP-A- 0 510 754
- EP-A- 0 522 609
- US-A- 4 298 650
- US-A- 4 741 993
- US-A- 4 893 021
- US-A- 5 432 351
- US-A- 6 120 902
- DATABASE WPI Section Ch, Week 200217 Derwent Publications Ltd., London, GB; Class A12, AN 2002-125526 XP002394752 -& JP 2001 201851 A (ASAHI KASEI KOGYO KK) 27 July 2001 (2001-07-27)
- DATABASE WPI Section Ch, Week 198813 Derwent Publications Ltd., London, GB; Class A11, AN 1988-087274 XP002394751 -& JP 63 037169 A (COLOUR CHEM KOGYO K) 17 February 1988 (1988-02-17)

## Description

### FIELD OF THE INVENTION

The present invention relates to any topcoat layer providing some degree of flexibility and/or improved scratch resistance to the composite layer arrangement to which it belongs. More in particular the present invention relates to a topcoat of a phosphor or scintillator screen or panel showing good resistance to cleaning fluids.

### BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which being incorporated in a panel, is exposed to an incident pattern-wise modulated X-ray beam and as a result thereof temporarily stores energy contained in the X-ray radiation pattern. At some interval after the exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. This imaging technique is called "digital radiography" or "computed radiography".

In both kinds of radiography it is preferred to be able to choose the phosphor that will be used on the basis of its speed and image quality in a layer arrangement without having to bother about problems arising from wear and tear of topcoat layers covering said phosphor, due to any mechanical or chemical impact.

As is well-known to anyone skilled in the art, CR screens are, generally, used in cassette based systems. They are exposed in light-tight cassettes to receive and store the image. Next, they are introduced in a digitizer for scanning. In the digitizer, the cassette is opened and the CR screen is taken out. In the scanning process, the screen is transported in the scanner. For transport of flexible screens, rigid rollers are used. In order to guarantee smooth and reliable transport, the rollers must exert pressure on the screen. Hard, sharp dust particle may be present on the surface of the rollers. If this is the case, the CR screen will be damaged in the handling process in the digitizer, if it is not sufficiently scratch-resistant. In the transport process, flexible CR screens are bent. As a consequence, the layers making up the screen must be sufficently elastic to avoid cracking or delamination.

In the digitizer, dust may accumulate, which can be deposited onto the CR screen during scanning and erasing. The presence of dust on the CR screen during X-ray exposure leads to image artefacts. Therefore, the screens must be cleaned by the radiographers on a regular basis.

Since CR screens are costly articles, they must have a long lifetime. I.e. it is important that they are well protected to avoid damage in the digitizer during scanning. In addition, it must be possible to clean the CR screens with cleaning fluids in an efficient way without causing damage.

In order to improve the mechanical and chemical stability of the CR screens, a top-coat is applied on top of the active layer containing the storage phosphor, for mechanical protection and for protection against the cleaning fluids that often contain an alcohol.

The top-coat always causes degradation of the image quality to some extent. Light-piping in the top-coat, e.g., results in a reduction of resolution in the image. The surface properties of the top-coat may, in addition, lead to increased noise, especially in images that are made at high X-ray doses. Therefore, an important criterion in the selection of the top-coat material is its impact on image quality and, more particularly, its impact on resolution and screen-structure noise.

Cellulose esters have been found to be promising materials for top-coats thanks to the fact that they provide abrasion resistant protection layers which have little negative impact on the image quality of the phosphor screen, and can be applied by coating from solvent via a doctor blade or via bar coating. So in US-A 4,758,645 a method has been described wherein a cellulose ester is functionalized with (meth)acrylate groups. US-A 4,308,119 teaches the use of low amounts of cellulose ester versus pentaerythritol (meth)acrylates. In the detailed description and in the examples of this patent nothing is mentioned about pentaerythritol acrylates containing ethyleneoxy groups.

In JP-A 2001-201851, as a photopolymerizable resin composition having good sensitivity, resolution, resist line forming property and resist peelability and developability with an alkaline aqueous solution, a photopolymeri-sable resin composition is provided, comprising in an amount of 1-50 wt % a photopolymerisable polyfunctional unsaturated compound wherein 1, 2 or 3 oxyethylene groups may appear. In EP-A 0 522 609 polyethyleneglycol diacrylates are mentioned as suitable di-functional monomers in order to provide a coating composition suitable for forming an adhesive primer layer on a hydrophobic resin support as, e.g., a polyethylene terephthalate support, which coating composition can be coated without solvents to be removed by drying the coated layer, and wherein said primer layer forms an excellent bond with phosphor binder layers of luminescent articles such as X-ray conversion screens. US-A 4,298,650 offers the advantageous combination of properties of the screens of US-A 4,188,449 (which do not require protective overcoats or curl control layers, and which are manufactured by a simple, inexpensive and easily controlled process which can be carried out at high coating speeds), as additionally exhibiting solubility in common solvents in order to facilitate recovery of the phosphor from coating scrap. As a second essential ingredient of the heat-curable component of the coating composition of that invention a polymerizable acrylic monomer is provided, and tetraethylene glycol diacrylate and tetraethylene glycol dimethacrylate are mentioned as typical examples of polyfunctional acrylic monomers. Polyethyleneglycol diacrylates are moreover mentioned in EP-A 0 510 754 as suitable di-functional monomers in a radiation curable composition of a resin binder applied in a protective coating of a phosphor screen having an embossed structure, in order to protect the phosphor layer against mechanical and chemical damage. In US-A 6,120,902 same polyethyleneglycol diacrylate is mentioned in a protective coating applied to a phosphor layer from a liquid protective radiation-curable coating composition that does not penetrate substantially into that phosphor layer and is hardened therein, while still making it possible to recover the phosphor to a large extent by dissolving its binder. In JP-A 63-037169 a UV-curable binder composition having improved adhesivity, curing rate and strength of surface coating film is provided by making use of an acrylic acid ester modified with an acrylamide methyl cellulose ester in place of cellulose acetate ester. In order to accomplish the elongation of lifetime of a radiation image storage panel a further improvement with respect to the humidity resistance, i.e., reducing the water vapor permeability of a protective layer. US-A 4,741,993 moreover discloses compounds which are preferably pre-polymers and/or olygomers having two or more double bonds, that may further contain a monomer (vinylmonomer) having unsaturated double bond as a reactive diluent. As a reactive diluent effecting to reduce the viscosity of the composition and enhance the radiation-curing rate, di-functional monomers as polyethyleneglycol diacrylate may be applied. In such a coating liquid for the protective layer, a binder which is not cured by irradiation or heating may be optionally contained as e.g. an included cellulose ester. US-A 4,893,021 discloses a photographic film pack assembly comprising a plurality of layers of photo-sensitive material and a plurality of layers of fluorescent material sensitive to such penetrating radiation arranged so that each said photo-sensitive layer faces a fluorescent layer, wherein phosphors are dispersed in an organic high molecular weight polymer binder as, e.g., cellulose nitrate, ethylcellulose, cellulose acetate, polyvinyl acetate, polystyrene, polyvinyl butyral, polymethyl methacrylate. Cellulose triacetate protective layers are further known from the examples in US-A 5,432,351, wherein as organic polymer binders in the phosphor layers of the intensifying screens polymer binders such as polyvinylbutyral, polyvinylacetate, nitrocellulose, ethylcellulose, vinylidene-chloride-vinylchloride copolymer, polymethylmethacrylate, polybutylmethacrylate, vinylchloride-vinylacetate copolymer, polyurethane, cellulose acetate butyrate and polyvinyl alcohol are mentioned.

A problem which is, however, observed with top-coats comprising cellulose esters is that, cleaning with ethanol (a major component of standard cleaning fluids), leads to damage and sometimes even to a removal of the top-coat.

### OBJECTIVES AND SUMMARY OF THE INVENTION

It is an objective of the present invention to provide in the top-coat layer of a phosphor or scintillator screen, plate or panel, an additive which improves cleanability of that top-coat layer while maintaining a good abrasion resistance.

It is a more preferred objective of the present invention to use a polymerisable additive which can be cross-linked by UV- or EB-curing in order to avoid that the additive is extracted by cleaning with screen cleaner.

The above mentioned objectives have been realised by providing a photo-curable or electron beam curable composition having the specific features defined in the corresponding independent claim 1, by curing a coatable formulation of said photo-curable composition in order to provide a phosphor or scintillator screen or panel having the desired properties as envisaged.

Specific features for preferred embodiments of the present invention are disclosed in the dependent claims.

Further advantages and specific embodiments of the present invention will become apparent from the following description and from the examples.

### DETAILED DESCRIPTION OF THE INVENTION

It has been found that (meth)acrylate type monomers with more than one (meth)acrylate group per monomer molecule and one or more ethyleneoxy groups per (meth)acrylate group in said monomer, when formulated with a cellulose ester and coated onto a so-called "powder image phosphor" or "PIP" screen or onto a "needle image phosphor" plate also called "NIP" screen, result, after UV and EB curing, in a significant improvement in cleanability with ethanol relative to the cellulose ester without (meth)acrylate additives. Moreover it has been shown that the improvement is much less pronounced with other types of (meth)acrylates.

According to the present invention a photo-curable or electron beam curable composition has been provided, wherein said composition comprises (1) a polymer or copolymer and (2) a (meth)acrylate type monomer having more than one (meth)acrylate group per monomer molecule and at least one ethyleneoxy group per (meth)acrylate group in said monomer, wherein the said polymer is a cellulose ester.

More particularly in that photo- or electron beam curable composition the ratio by weight of cellulose ester to (meth)acrylate type monomer is between 1:2 and 100:1.

In order to allow the photo-curable composition according to the present invention to be curable, e.g. with UV radiation, said composition essentially comprises a photoinitiating system, i.e. in form of a photo initiator.

For EB curing, no photoinitiating system is required.

According to the present invention the photo-curable composition is in form of a solution in order to provide a layer-forming formulation, providing ability to be coated. The screen or panel according to the present invention thus comprises a support and a phosphor or scintillator layer thereupon, wherein said phosphor or scintillator layer is covered with the layer-forming formulation disclosed hereinbefore, in form of a dried layer obtained after photo or electron beam curing.

According to the present invention, in favour of image sharpness, the said dried layer obtained after photo or electron beam curing has a thickness of at most 30 µm, preferably in the range from 1 µm to 15 µm, and even more preferably in the range from 2 µm to 6 µm.

In the method of curing a layer-forming formulation according to the present invention, curing proceeds by ultra-violet radiation or by electron beam curing.

Moreover in the method according to the present invention, curing proceeds by ultra-violet radiation or by electron beam curing. More in particular curing proceeds after coating said layer-forming formulation as a protective coating upon a phosphor layer or scintillator layer present on a support, followed by drying.

In the method according to the present invention, said coating is performed by doctor blade coating or by bar coating.

Embodiments for the layer arrangement of the phosphor or scintillator screen, plate or panel are selected from following.

The layer arrangement of the screen or panel is normally so that, coated upon a support layer, there is an intermediate layer between support and phosphor layer (such as parylene as disclosed in US-A 2004/0051441 and US-A 2004/0051438 or another, e.g. dye containing layer as in US-A 6,927,404) wherein such a parylene layer may also be present between phosphor layer and outermost protective layer or topcoat as in US-A 6,710,356 or as described in US-A 6,822,243. A good adhesion between the two protective layers is advantageously provided when use is made of a phosphoric acid ester compound as disclosed in US-A 2005/0067584. The parylene layers mentioned above are particularly recommended to be applied as layers protecting the phosphor or scintillator from moisture, as is appreciated well when use is made of alkali metal halide scintillators or phosphors, known as being very sensitive to humidity of the environment.

The support can be any support known in the art: any solid of an organic or inorganic nature, which can assume any geometrical shape, such as foils, fibers (e.g. carbon fiber reinforced resin sheets and more particularly sheets, each of which includes carbon fibers arranged in a direction and impregnated with a heat resistant resin such that directions of the carbon fibers in the carbon fiber reinforced resin sheets are different from each other), and particles can be used. As an inorganic non-metallic support chemically reinforced glass or crystallised glass can be used. Inorganic metallic supports, suitable for use are, e.g. metal substrates such as those of aluminum, titanium, lead, iron, copper, steel, molybdenum, beryllium; supports of metallic and non-metallic oxides such as those of aluminum, titanium, lead, copper, beryllium, manganese, tungsten, vanadium, and silicon oxides.

As an organic support a polyimide sheet, epoxy compounds and thermoplastic and thermosetting compounds of different compositions, polyether, polyester and polycarbonate compositions may be used, without however being limited thereto. It is recommended to subject the support to cleaning procedures as to washing and degreasing before applying a protective layer unit or arrangement as set forth above.

According to the present invention a panel is preferred, wherein the phosphor layer is a photostimulable phosphor layer, also called "storage phosphor layer". This does not mean that the conventionally known prompt emitting phosphor layers in intensifying screens as well as scintillators in scintillator panels may not take profit from the topcoat according to the present invention, as those panels are also sensitive to mechanical damage and to organic cleaning solutions.

When a storage phosphor screen with a topcoat layer has protruding beads it is important that the beads do not touch mechanical parts of the scanner and that this is true even when the storage panel shows some wobble during transport in the scanner. Therefore beads when used as spacing particles in a storage phosphor screen of the present invention preferably have a median volume diameter, dᵥ₅₀, so that 0.5 µm ≤ dv50 ≤ 25 µm and a median numeric diameter, dₙ₅₀, so that 0.1 ≤ dᵥ₅₀/dₙ₅₀ ≤ 1.20. Further the beads are preferably adapted to the thickness, t, of the layer B on the storage panel of the present invention so that said polymeric beads have a median volume diameter, dᵥ₅₀, wherein 0.25 ≤ dᵥ₅₀/t ≤ 4.0.

The storage phosphor layer in a panel of the present invention may comprise any photostimulable phosphor known in the art.

According to the present invention, in said screen or panel, covered with the photo-cured or electron beam cured layer-forming formulation as set forth hereinbefore, said phosphor is a powder phosphor. Well-known powder phosphors suitable for use in a screen or panel according to the present invention are rare earth activated alkaline earth fluorohalide phosphors. So a phosphor screen or panel according to the present invention preferably has, as a phosphor composition a lanthanide activated alkaline earth metal fluoro halide type phosphor.

In another embodiment, in said screen or panel, covered with the photo-cured or electron beam cured layer-forming formulation, said phosphor is a needle-shaped phosphor. In a more particular embodiment, when said phosphor has been vapor deposited onto a support in a vapor depositing system by thermal or by electron beam vaporization, said phosphor is a binderless phosphor.

Such a panel wherein said binderless photostimulable phosphor is a CsX:Eu stimulable phosphor, wherein X represents a halide selected from the group consisting of Br and Cl has e.g. been disclosed in US-A 6,802,991. Besides CsX as a matrix compound and Eu as a dopant, impurities and further elements, whether or not as impurities, may be present in the phosphor composition as described in US-A 2006/0076525. Such binderless CsX:Eu stimulable phosphor layers are especially in favour of sharpness due to a good absorption and optical reflection within needle-shaped phosphor crystals. Between said needles voids are present which may be filled, up to a defined extent, as has been set forth in US-A 6,800,362 and US-Application 2003/0168611. Further in favour of image sharpness said phosphor particles may be coloured with a nanocrystalline dye as described in US-A 6,977,385.

When on such a phosphor layer with needle shaped phosphor crystals, separated by voids, a layer A with very low water permeability is deposited, it is preferred that this layer A is a chemical vapor deposited parylene layer, while such a layer not only covers the surface of the needle crystals, but also covers the voids between the needles thus protecting the edges of the phosphor needles thoroughly against humidity. A phosphor panel of the present invention may also comprise edge reinforcements as the ones described in e.g. US-A 5 334 842 and US-A 5 340 661.

A phosphor panel of the present invention can be a self-supporting panel as well as a panel comprising a support. This support can be any support known in the art, but in view of the desired high humidity resistance of the screens, a support with very low water vapour permeability is preferably used.

A preferred support is a support of anodised aluminium and the supports as disclosed in US-A 6,815,095 and US-Application 2003/0134087.

In a particular embodiment of the present invention the area of the phosphor layer is smaller than the area of the support so that the phosphor layer does not reach the edges of the support. Thus a panel with a support having a surface larger than the main surface of the phosphor layer, so that the phosphor layer leaves a portion of the support free, and wherein the protective layer comprising layer A and topcoat layer B covers at least in part the portion of the support left free by the phosphor layer represents a particular embodiment of the present invention as already disclosed hereinbefore. An advantage of such a construction resides in the fact that the edges of the phosphor layer do not touch mechanical parts of the apparatus and are thus less easily damaged during use of the panel, more particularly e.g. during transport in the scanner. Another advantage of this construction is that no special edge reinforcement is necessary (although, if desired, further edge reinforcement can be applied). Although a construction of a phosphor panel wherein the surface of the phosphor layer is smaller than the surface of the support, so that the phosphor layer does not reach the edges of the support, represents a specific embodiment of the present invention, such a construction can be beneficial for the manufacture of any phosphor panel covered with any protective layer known in the art.

In the case wherein between the support material and the phosphor layer a parylene layer is present, the surface roughness of the covered support shows a better smoothness as surface roughness decreases (preferably 0.5 or less and even more preferably 0.1 or less), as described in US-A 2004/0051438 which may be in favour of depositing columnar crystals or needles having smaller diameters, thereby leading to an improved packing density of the said needles per square unit of the surface area of the vapour deposited photostimulable phosphor layer and improved sharpness or image definition. More details about dimensions of such columnar, needle-shaped or cylindrical phosphors have been disclosed in US-A 6,967,339.

In the screen or panel according to the present invention said phosphor is a photostimulable phosphor as applied in CR techology. The photostimulable screen or panel is coated onto a so-called "powder image phosphor" or "PIP" screen (preferably coated with europium doped barium fluorohalide phosphor particles) or onto a "needle image phosphor" plate also called "NIP" screen (preferably coated by vapour deposition with CsBr:Eu needle-shaped crystals). Said needle-shaped crystals present in a binderless layer may be scraped off from the support whereupon vapor deposition has been applied, optionally milled in order to reduce the length of the needles (normally in the range from 100 up to 1000 µm), and coated after having been dispersed in a binder and forming a pseudo-PIP screen.

An advantage of the present invention relative to using UV/EB curable monomers or mixtures of monomers which do not contain a polymer such as a cellulose ester, is that the coated material is not liquid or sticky after drying, meaning that the phosphor coating can be rolled up for transportation before the UV/EB curing step.

As an advantageous effect of the present invention the physical stability of the phosphor or scintillator imaging plates has been proved to satisfy the most stringent requirements, in that the image quality is not changed over a long period of frequent use and reuse.

### Examples

While the present invention will hereinafter be described in connection with preferred embodiments thereof, it will be understood that it is not intended to limit the invention to those embodiments.

### Products used were the following:

Cellit CAB 381-2: cellulose acetate butyrate, commercially available from Eastman chemicals.

A1: Ebecryl 1290: Hexafunctional aliphatic urethane acrylate containing an acrylated polyol diluent, commercially available from UCB.

A2: SR256. 2(2-ethoxyethoxy)ethyl acrylate, commercially available from Sartomer.

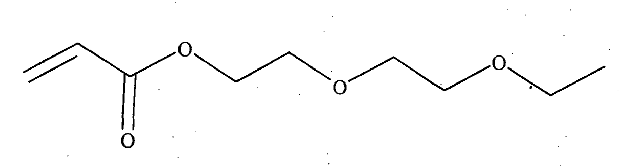

A3: SR203: tetrahydrofuryl methacrylate, commercially available from Sartomer

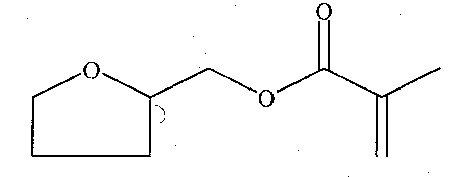

A4: SR508. Dipropyleneglycol diacrylate, commercially available from Sartomer

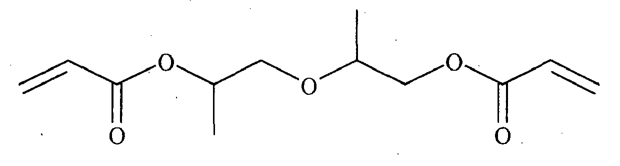

A5: SR349. Ethoxylated(3) bisphenol A diacrylate, commercially available from Sartomer.

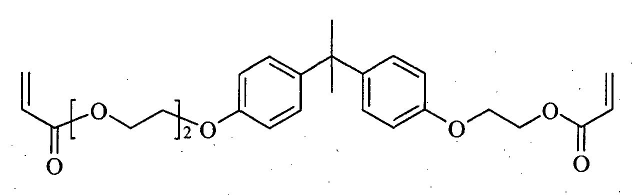

A6: SR444: Pentaerythritol triacrylate, commercially available from Aldrich

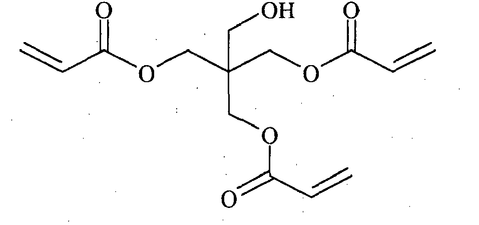

A7: SR454. Ethoxylated(3) trimethylolpropane triacrylate commercially available from Sartomer

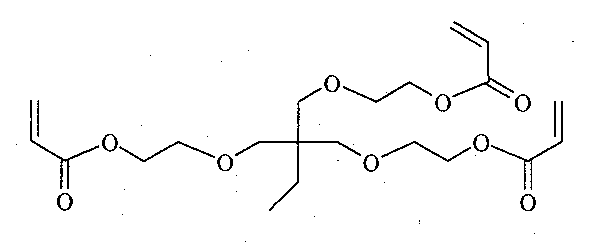

A8: SR610. Polyethyleneglycol(600) diacrylate, commercially available from Sartomer 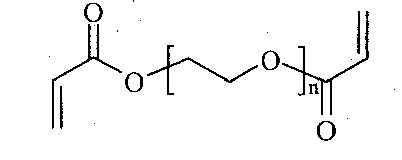 n = approximately 14.

A9: SR344. Polyethyleneglycol(400) diacrylate, commercially available from Sartomer 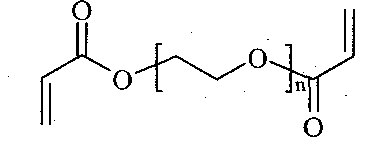 n = approximately 9.

A10: CN435. Ethoxylated(15) trimethylolpropane triacrylate, commercially available from Sartomer 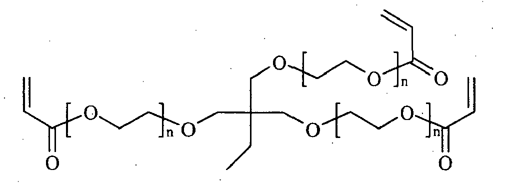 n = 5

### Preparation of topcoat solutions containing cellulose ester and cellulose ester/acrylate mixtures

The formulations were made by adding together the components shown in the Table 1 and stirring until the solid components were dissolved in the solvent mixture.

**Table 1**

| Product | Formulation R1 (grams) | Formulations F1-F10 (grams) |
|---|---|---|
| Toluene | 9.00 | 9.00 |
| Acetone | 4.20 | 4.20 |
| MOP | 1.68 | 1.68 |
| Iso-propanol | 15.12 | 15.12 |
| Cellit | 3.20 | 3.20 |
| Benzophenone | / | 0.10 |
| CN386 | / | 0.15 |
| Darocur 1173 | / | 0.15 |
| Acrylate Ax | / | 1.92 (A1-A10) |
| % solids | 9.64 | 15.54 |

| | | |
|---|---|---|
| MOP = 1-methoxy-2-propanol; Cellit CAB 381-2 = cellulose acetate butyrate, commercially available from Eastman chemicals; CN386 = amine modified acrylate co-initiator, commercially available from Sartomer; Darocur 1173 = photoinitiator, commercially available from Ciba-Geigy; Acrylate Ax = acrylate A1 to A10 (see structures above). | | |

The solutions were coated with a doctor blade at a wet thickness of 80 microns onto a CR powder phosphor screen. The coatings were then dried in a ventilated oven at 70ºC for 30 minutes, allowed to cool to room temperature and then passed three times under a Technigraf UL00855 UV lamp with a belt speed of 3m/min.

The coatings were then treated with ethanol by rubbing the coatings 3 times with a cotton pad soaked in ethanol.

The powder phosphor screen was prepared as follows, before being coated with the covering protective layers as described above:

### Preparation of the phosphor and the phosphor layer

Preparation of the photostimulable phosphor was performed as follows.

Ba_{0.859} Sr_{0.14} Eu_{0.01} F₂ was prepared by adiabatic reaction of the appropriate amounts of BaCO₃, SrCO₃ and Eu₂O₃ in an aqueous dispersion with HF.

A raw mix was made by thoroughly mixing the following ingredients in the following proportions:

| | |
|---|---|
| Ba_{0.859}Sr_{0.14}Eu_{0.01}F₂: | 0.528 mole |
| BaBr₂: | 0.375 mole |
| BaI₂: | 0.095 mole |
| NH₄Br: | 0.045 mole |
| CsI: | 0.003 mole |
| PbF₂: | 0.0003 mole |
| Sm₂O₃: | 0.00025 mole |
| Eu₂O₃: | 0.00072 mole |

The phosphor was made in 3 firing steps:

### First firing step:

Three crucibles, each containing 165 g of raw mix were placed in a quartz tube, which was sealed with a flange having a gas inlet and a gas outlet with water lock. After flushing with N₂ for 15 minutes, the quartz tube was placed in a box furnace at 850°C. Dwell time in the furnace was 2 hours and the tube was flushed with N₂ at 1.5 l/min.

After that firing the tube was taken out of the furnace and left to cool for 30 minutes while being flushed with N₂.

Next, the crucibles were taken out of the tube and the powder was deagglomerated with mortar and pestle.

The deagglomerated powder was milled on an Alpine AFG-100 air mill with three 3 mm nozzles, a milling chamber pressure of 3 bar and a wheel rotation rate of 3,500 r.p.m..

### Second firing step:

Three crucibles containing 230 g of first fired material each, were placed in a quartz tube, which was sealed with a flange having a gas inlet and a gas outlet with water lock. The quartz tube was immediately placed in a box furnace at 725°C. Dwell time in the furnace was 5.5 hours and the tube was flushed with N₂ at 1.5 l/min.

After that firing the tube was allowed to cool in the furnace to 450°C while being flushed with N₂. Next, the tube was opened, taken out of the furnace and allowed to cool further for 30'. The crucibles were taken out of the tube and the powder was deagglomerated with mortar and pestle.

The deagglomerated powder was milled again on an Alpine AFG-100 air mill with three 3 mm nozzles, a milling chamber pressure of 3 bar and a wheel rotation rate of 3,500 r.p.m..

Phosphors prepared in the above described way were used as starting material in order to prepare fine phosphor samples.

The fine phosphors were made by remilling (3rd milling), refiring in the same way as in the second firing and remilling (4th milling) on the Alpine AFG-100 air-jet mill.

3rd and 4th milling rates were 9.000 rpm.

The final fine particle size powder phosphor was seperately dispersed in a binder solution (see phosphor layer composition hereinafter).

| Phosphor layer composition: | |
|---|---|
| STANN JF95B (from SANKYO ORGANIC Chemicals Co. Ltd.) | 0.45 g |
| KRATON FG19101X (from Shell Chemicals) | 6.25 g |
| BaSrFBr:Eu | 150 g |

### Preparation of the phosphor layer:

STANN JF95B and KRATON FG19101X were dissolved while stirring in the prescribed amounts in 41.65 g of a solvent mixture from methylcyclohexane, toluene and butyl acetate in ratios by volume of 50:35:15. The phosphors were added thereafter and stirring was further proceeded for another 10 minutes at a rate of 1700 r.p.m.. Then the phosphor lacquer was given a ball-mill treatment during 1 min at 1700 r.p.m..

The composition was doctor blade coated at a coating rate of 2.5 m per minute and a tickness of 600 □m onto a subbed 175 µm thick polyethylene terephthalate support and dried at room temperature during 30 minutes. In order to remove volatile solvents as much as possible the coated phosphor plate was dried at 60°C in a drying furnace.

Results with respect to cleanability of the top-coat layer are shown in Table 2.

**Table 2**

| Formulation | Type acrylate | Cleanability |
|---|---|---|
| R1, comparison | None | Very poor |
| F1, comparison | Ebecryl 1290 | Poor |
| F2, comparison | SR256 | Poor |
| F3, comparison | SR203 | Poor |
| F4, comparison | SR508 | Poor |
| F5, invention | SR349 | Good |
| F6, comparison | SR444 | Poor |
| F7, invention | SR454 | Good |
| F8, invention | SR610 | Good |
| F9, invention | SR344 | Good |
| F10, invention | CN435 | Good |

Poor cleanability means that a substantial amount of the top-coat was visibly removed by rubbing with ethanol.

Good cleanability means that the top-coat was not at all removed by cleaning with ethanol.

It is clear from Table 2 that only the formulations F5 and F7-F10 provide good cleanability for the screens, i.e. when the top-coat is made of a cellulose ester type polymer and a (meth)acrylate type monomer with more than one (meth)acrylate group per monomer molecule and at least one ethyleneoxy group per (meth)acrylate group in said monomer.

Having described in detail preferred embodiments of the current invention, it will now be apparent to those skilled in the art that numerous modifications can be made therein without departing from the scope of the invention as defined in the appending claims.

## Claims

1. A photo-curable or electron beam curable composition comprising (1) a polymer or copolymer and (2) a (meth)acrylate type monomer having more than one (meth)acrylate group per monomer molecule and at least one ethylene oxy group per (meth)acrylate group in said monomer, **characterised in that** the said polymer is a cellulose ester.

2. A photo- or electron beam curable composition according to claim 1, in which the ratio by weight of cellulose ester to (meth)acrylate type monomer is between 1:2 and 100:1.

3. A photo curable composition according to claim 1 or 2, wherein said composition further comprises a photo initiator.

4. A layer-forming formulation in form of a solution, having a photo- or electron beam curable composition according to any one of the claims 1 to 3.

5. Screen or panel comprising a support and a phosphor or scintillator layer thereupon, wherein said phosphor or scintillator layer is covered with the layer-forming formulation according to claim in form of a dried layer.

6. Screen or panel according to claim 5, wherein said dried layer has a thickness of at most 30 µm.

7. Screen or panel according to claim 5 or 6, wherein said phosphor is a powder phosphor.

8. Screen or panel according to claim 5 or 6, wherein said phosphor is a needle-shaped phosphor.

9. Screen or panel according to claim 8, wherein said phosphor is a binderless needle-shaped phosphor.

10. Screen or panel according to any one of the claims 5 to 9, wherein said phosphor is a photostimulable phosphor.

11. Method of curing a layer-forming formulation according to claim 5, wherein curing proceeds by ultra-violet radiation or by electron beam curing.

12. Method according to claim 11, wherein curing proceeds after coating said layer-forming formulation as a protective coating upon a phosphor layer or scintillator layer present on a support, followed by drying.

13. Method according to claim 12, wherein coating is performed by doctor blade coating or by bar coating. ■

## Patentansprüche

1. Eine strahlungshärtbare oder durch Elektronenstrahl härtbare Zusammensetzung, enthaltend (1) ein Polymer oder Copolymer und (2) ein Monomer des (Meth)acrylat-Typs, das mehr als eine (Meth)acrylatgruppe pro Monomermolekül und mindestens eine Ethylenoxygruppe pro (Meth)acrylatgruppe im Monomer enthält, **dadurch gekennzeichnet, dass** das Polymer ein Celluloseester ist.

2. Strahlungshärtbare oder durch Elektronenstrahl härtbare Zusammensetzung nach Anspruch 1, in der das Gewichtsverhältnis des Celluloseesters zum Monomer des (Meth)acrylat-Typs zwischen 1:2 und 100:1 liegt.

3. Strahlungshärtbare Zusammensetzung nach Anspruch 1 oder 2, **dadurch gekennzeichnet, dass** die Zusammensetzung ferner einen Fotoinitiator enthält.

4. Eine schichtbildende Zusammensetzung in Form einer Lösung, enthaltend eine strahlungshärtbare oder durch Elektronenstrahl härtbare Zusammensetzung nach einem der Ansprüche 1 bis 3.

5. Folie oder Schirm, die bzw. der einen Träger und eine darauf angebrachte Leuchtstoffschicht oder Szintillatorschicht umfasst, **dadurch gekennzeichnet, dass** die Leuchtstoffschicht oder Szintillatorschicht mit der schichtbildenden Zusammensetzung nach Anspruch 4 in Form einer getrockneten Schicht beschichtet ist.

6. Folie oder Schirm nach Anspruch 5, **dadurch gekennzeichnet, dass** die Stärke der getrockneten Schicht bei höchstens 30 µm liegt.

7. Folie oder Schirm nach Anspruch 5 oder 6, **dadurch gekennzeichnet, dass** der Leuchtstoff ein Pulverleuchtstoff ist.

8. Folie oder Schirm nach Anspruch 5 oder 6, **dadurch gekennzeichnet, dass** der Leuchtstoff ein nadelförmiger Leuchtstoff ist.

9. Folie oder Schirm nach Anspruch 8, **dadurch gekennzeichnet, dass** der Leuchtstoff ein bindemittelfreier nadelförmiger Leuchtstoff ist.

10. Folie oder Schirm nach einem der Ansprüche 5 bis 9, **dadurch gekennzeichnet, dass** der Leuchtstoff ein ausleuchtbarer Leuchtstoff ist.

11. Verfahren zur Härtung einer schichtbildenden Zusammensetzung nach Anspruch 5, **dadurch gekennzeichnet, dass** die Härtung mittels Ultraviolettstrahlung oder Elektronstrahl erfolgt.

12. Verfahren nach Anspruch 11, **dadurch gekennzeichnet, dass** die Härtung anschließend an den Auftrag der eine Schutzschicht bildenden Zusammensetzung auf eine auf einen Träger angebrachte Leuchtstoffschicht oder Szintillatorschicht erfolgt, wonach eine Trocknung vorgenommen wird.

13. Verfahren nach Anspruch 12, **dadurch gekennzeichnet, dass** der Auftrag durch Rakelbeschichtung oder Stabbeschichtung erfolgt.

## Revendications

1. Une composition durcissable par rayonnement ou par faisceau électronique, contenant (1) un polymère ou copolymère et (2) un monomère du type de (méth)acrylate comprenant plus d'un groupe (méth)acrylate par molécule de monomère et au moins un groupe éthylèneoxy par groupe (méth)acrylate dans le monomère, **caractérisée en ce que** le polymère est un ester de cellulose.

2. Composition durcissable par rayonnement ou par faisceau électronique selon la revendication 1, **caractérisée en ce que** le rapport pondéral de l'ester de cellulose au monomère du type de (méth)acrylate est compris entre 1:2 et 100:1.

3. Composition durcissable par rayonnement selon la revendication 1 ou 2, **caractérisée en ce que** la composition contient en outre un photoinitiateur.

4. Une composition formatrice de couche sous forme d'une solution, contenant une composition durcissable par rayonnement ou par faisceau électronique selon l'une quelconque des revendications 1 à 3.

5. Un écran ou panneau comprenant un support et une couche luminescente ou couche scintillante appliquée sur le support, ladite couche luminescente ou couche scintillante étant recouverte de la composition formatrice de couche selon la revendication 4 sous forme d'une couche séchée.

6. Ecran ou panneau selon la revendication 5, **caractérisée en ce que** la couche séchée présente une épaisseur maximale de 30 µm.

7. Ecran ou panneau selon la revendication 5 ou 6, **caractérisée en ce que** le luminophore est un luminophore sous forme de poudre.

8. Ecran ou panneau selon la revendication 5 ou 6, **caractérisée en ce que** le luminophore est un luminophore aciculaire.

9. Ecran ou panneau selon la revendication 8, **caractérisée en ce que** le luminophore est un luminophore aciculaire sans liant.

10. Ecran ou panneau selon l'une quelconque des revendications 5 à 9, **caractérisée en ce que** le luminophore est un luminophore photostimulable.

11. Un procédé pour le durcissement d'une composition formatrice de couche selon la revendication 5, **caractérisée en ce que** le durcissement s'effectue par rayonnement ultraviolet ou par faisceau électronique.

12. Procédé selon la revendication 11, **caractérisée en ce que** le durcissement s'effectue après l'application de la composition formant une couche protectrice sur une couche luminescente ou couche scintillante déjà appliquée sur un support, l'étape de durcissement étant suivie d'une étape de séchage.

13. Procédé selon la revendication 12, **caractérisée en ce que** l'application est réalisée par enduction par racle ou par enduction par barre.
